# EUROPEAN PATENT SPECIFICATION

(11) **EP 3 772 274 B1**
(45) Date of publication and mention of the grant of the patent: **01.10.2025**
(21) Application number: 19189972.3
(22) Date of filing: 05.08.2019
(51) Int. Cl.: A01K 5/02

(54) **POWERED FEED VEHICLE**
ANGETRIEBENES FÜTTERUNGSFAHRZEUG
VÉHICULE D'ALIMENTATION MOTORISÉ

(43) Date of publication of application: 10.02.2021
(73) Proprietor: Hedensted Gruppen A/S, 8722 Hedensted (DK)
(72) Inventor: Christiansen, Kim, 5464 Brenderup (DK); Madsen, Jens Jørgen, 5220 Odense SØ (DK)
(74) Representative: COPA Copenhagen Patents

(56) References cited:
- FR-A1- 2 454 264
- FR-A1- 2 673 808
- KR-A- 20040 069 087
- US-A- 4 432 499

## Description

### Field of the invention

The present invention relates to a powered feed vehicle for delivering feed portions to fur animal cages, especially mink cages, especially to a wire mesh top wall thereof, said vehicle having a longitudinal axis, a front, a back, a first lateral side and a second lateral side, and comprising:
- a frame supported by wheels and carrying a feed container with an inner space for storing feed, especially pasty (paste-like) feed, and
- a pump mechanism for pumping feed from the feed container into and through a tubing of a feed-delivering device to an inner chamber defined by a feed-delivering mouthpiece of the feed-delivering device and out through a feed outlet opening of the mouthpiece, said feed outlet opening having a central axis.

### Background of the invention

Powered feed vehicles are known both as manned and unmanned vehicles, see e.g. EP 3 036 991 A1, DK 176 402 B1 and WO 2008/101500 A1. Additionally, feed vehicles with a feed-delivering device or feed arm having a mouthpiece with a cutting device having a cutting member configured for being moved across the outlet opening of the mouthpiece from one side to the opposite side of the opening for severing a string of feed are known from e.g. DK 177 727 B1, DK 177 560 B1 and DK 176 402 B1.

US 4,432,499 A discloses a vehicle carrying a grinder-mixer providing a low bin profile and mixing through the use of complementing horizontal and vertical circulatory paths of the ground feed, which is produced by a pair of cooperating parallel auger conveyors extending in a horizontal plane along the bottom of the mixing bin in side by side relationship and rotating so as to move the feed in opposite directions, each feeding the other, in cooperation with a pair of vertical cooperating augers spaced axially of the horizontal augers and moving and mixing the ground feed along a circulatory path in vertical planes. One of the horizontal augers is connected to a discharging system and is reversible to cooperate with the latter to empty the bin.

FR 2 454 264 A1 discloses a truck distributing mash in powder or granular form to the mangers of cow-stalls etc. The base of the mash hopper mounted on the truck has a spout in which a first power-driven auger is mounted, discharging the mash through one end of the hopper into a cylindrical chamber coaxial to the outlet. A distribution pipe connected to this chamber contains a second power-drive auger, discharging the mash through the outlet end.

KR 2004 0069087 A discloses a transporting vehicle for stock farm. The transporting vehicle includes: wheels rotated by a driving motor arranged at the lower face; a load chest arranged on the wheels; a feeds supply tube extended to one side of the load chest so as to be connected with the inner part thereof; a screw shaft mounted inside the feeds supply tube; and a driving motor for rotating the screw shaft. The feed loaded inside the load chest can be supplied to the cattle shed through a drainage hole of the feed supply tube by moving the transporting vehicle along the cattle shed and by rotating the screw shaft with aid of the driving motor.

FR 2 673 808 A1 discloses a hopper mounted on wheels, at the bottom of which is placed an adjustable system for receiving the maize or feed. An Archimedean screw conveys the maize or feed, in an ascending movement, into a tube, and it then descends by gravity within the tube down to a force-feeding funnel.

In the known feed vehicles, the feed is pumped through the tubing and out of the outlet opening of the mouthpiece by means of a pump arranged at the bottom of the feed container. Thereby, a long string of feed, i.e. a large amount of feed is compressed between the pump and the outlet opening during feed delivery. The large amount of feed compressed has a negative effect on the energy consumption and on the accuracy of the size of the delivered feed portion.

### Summary of the Invention

The object of the present invention is to provide a feed vehicle having low energy consumption and allowing for fast discharging of an accurate and predetermined amount of feed precisely on a predetermined point of the top wall of cages.

The feed vehicle according to the invention as defined in claim 1, includes a pump mechanism which comprises:
- a first pump means having an inlet communicating with the interior of the feed container and an outlet communicating with an inlet of the tubing, said first pump means being configured for pumping feed from the interior of the feed container to the tubing, said tubing having an outlet communicating with an inlet of the mouthpiece, and
- a second pump means comprising a drive means and being configured for pumping feed from the mouthpiece out through the outlet opening of the mouthpiece,
wherein the drive means is a linear actuator comprising a housing and an extendable and retractable rod, such as a high-speed actuator, e.g. a high-speed linear motor comprising a stator and an extendable and retractable slider, rod or shaft.

The second pump of the feed-delivering device of feed vehicle of the present invention is arranged at or in the mouthpiece whereby essentially only the relatively small amount of feed in the mouthpiece is compressed during feed delivery, thereby reducing the energy consumption for delivery of the feed. Additionally, it is possible to displace a very accurate food portion size out of the outlet opening in a very short period of time. Thereby, it is possible to deliver the food portion exactly on the desired point of the top wall of a cage while passing the cage, i.e. without stopping the feed vehicle.

The first pump means can be a displacement pump, such as a rotary displacement pump, such as e.g. a screw pump, a mono pump, a lobe pump or a gear pump. At present, the first pump means is preferably a screw pump. The first pump can be constantly running when the pump mechanism (pump system) is operating.

However, according to an, at present, preferred embodiment, the first pump means is a screw pump arranged at the bottom of the feed container and having an inlet communicating with the inner of the feed container and an outlet communicating with an inlet of the tubing.

The screw pump can be arranged in the feed container at the bottom thereof.

According to the invention, the drive means is a linear actuator comprising a housing and an extendable and retractable rod, such as a high-speed actuator, e.g. a high-speed linear motor comprising a stator and an extendable and retractable slider, rod or shaft.

According to a further embodiment, the second pump means comprises the inner chamber defined by the mouthpiece, and a portion thereof defined by a movable wall portion is by means of the drive means movable between a first position in which the chamber defines a first volume and a second position in which the chamber defines a second volume being less than the first initial volume.

The difference between the first and the second volume of the chamber corresponds at least essentially to the amount of feed displaced from the chamber and out through the outlet opening of the mouthpiece when the movable wall portion is moved from the first to the second position.

According to an embodiment, the movable wall portion is a wall of a piston arranged axially movable in a cylindrical part of the chamber of the mouthpiece, the piston being driven by the drive means.

According to an additional embodiment, the cylindrical part of the chamber of the mouthpiece has a longitudinal axis and is directed towards the outlet opening of the mouthpiece, and preferably, the longitudinal axis extends essentially through the outlet opening of the mouthpiece.

According to an embodiment, the longitudinal axis of the cylindrical part of the chamber of the mouthpiece extends essentially through the center of the outlet opening of the mouthpiece.

Further, according to an embodiment, the movable wall portion is a resilient wall, e.g. a cylindrical wall surrounded by a cover, forming a compartment between the cover and the resilient wall portion, the compartment containing a liquid and being connected to a hydraulic cylinder/piston unit, the piston thereof being driven by the drive means.

When feed is to be delivered to a cage, the drive means acts on the piston to supply liquid to the compartment and thereby compresses the resilient wall from the first position defining the first volume and the second position defining a second volume being less than the first volume. Thereby, a feed portion size is displaced out through the outlet opening corresponding at least essentially to the difference between the first and the second volume.

According to an embodiment, the drive means of the pump means is a actuator allowing the pump means to deliver, i.e. displace, the largest expected feed portion, such as a feed portion of 500 ml, out through the outlet opening of the mouthpiece in 1.0 sec or less, 0.8 sec or less, 0.6 sec or less, 0,5 sec or less, such as 0,4 sec, 0,3 sec, 0,2 sec or 0.1 sec or less.

According to a further embodiment, the pump mechanism comprises a third pump means, the third pump means being configured for pumping feed through the tubing and into the mouthpiece.

The third pump means can be a displacement pump, such as a rotary displacement pump, such as e.g. a screw pump, a mono pump, a lobe pump or a gear pump. At present, the first pump means is preferably a screw pump. The third pump can be constantly running when the pump mechanism (pump system) is operating. The speed of the third pump and thereby the flow rate thereof can be controlled in dependency of the amount of feed to be delivered on a cage.

According to a further embodiment, the third pump means comprises the tubing and a pump screw arranged in the tubing.

According to an embodiment, the feed vehicle comprises a cutting device comprising at least one cutting member arranged to be moved transversely in front of the outlet opening of the mouthpiece for severing a feed string emerging from the outlet opening.

According to a further embodiment, the cutting device comprises a first and a second cutting member, each having a leading edge and being arranged to move towards each other from respective first positions outside the outlet opening as seen in the direction of the central axis of the outlet opening of the mouthpiece and a cutting position in which the leading edges of the cutting members meet within and together have swept the entire outlet opening as seen in the direction of the central axis of the outlet opening of the mouthpiece and severed a feed string emerging from the outlet opening.

The cutting members can meet at a central line or band across the outlet opening and preferably at an essentially vertical central line located in an essentially vertical plane through the central axis of the outlet opening of the mouthpiece.

The leading edges of the cutting members can be linear.

The leading edges of the cutting members can also have another shape than linear, such as a curved shape. In the latter situation, the leading edges of the cutting members preferably have a complementary curved shape.

The leading edges of the cutting members can abut each other or be arranged adjacent each other over the entire extent of the leading edges of the cutting members in the cutting position thereof.

The cutting members and the leading edges thereof can be moved towards and away from each other in a rotational movement. In other words, the cutting device can comprise a rotational system configured for moving the cutting members towards and away from each other in a rotational movement.

Alternatively, the cutting members and the leading edges thereof can be moved towards and away from each other in a linear movement. In other words, the cutting device comprises a translatory system configured for moving the cutting members towards and away from each other in a linear movement.

According to an additional embodiment, the cutting device comprises a single cutting member being configured to be moved across the outlet opening for severing a food string emerging from the outlet opening of the mouthpiece by a rotational system configured for moving the cutting member in a rotational movement or by a translatory system configured for moving the cutting member in a linear movement.

The cutting member(s) can be configured and dimensioned to cover the entire outlet opening as seen the direction of the longitudinal axis of the mouthpiece in the cutting position. Thereby, the cutting member(s) become combined cutting and closing member(s) covering (and at least essentially closing) the entire outlet opening as seen in the direction of the central axis of the outlet opening of the mouthpiece in the cutting position.

The cutting member(s) can sweep the outlet opening adjacent the annular edge thereof or be in contact with the annular edge defining the outlet opening.

The cutting member(s) can also sweep in front of the outlet opening slightly spaced from the annular edge defining the outlet opening, such as spaced 2 to 7 mm from the annular edge.

The cutting member(s), especially a portion thereof at the leading edge, is/are preferably plate-shaped.

The tubing of the feed-delivering device communicates at a lower upstream end thereof with the outlet of the first pump of the pump mechanism having a pump inlet communicating with the interior of the feed container, and the tubing communicates at an upper downstream end with a mouthpiece inlet of the mouthpiece.

According to a further embodiment, the feed vehicle comprises a flow meter in the tubing adjacent an outlet thereof or in the mouthpiece adjacent an inlet thereof, the flow meter being configured for measuring the flow of feed from the tubing and into the mouthpiece.

The delivering device can at a lower end thereof be arranged pivotally relative to the feed container. It is thereby possible to adjust the position of the outlet opening of the mouthpiece of the feed-delivering device or the feed-delivering arm to the desired height above the top wall of the cages.

The feed-delivering device can, at a lower end thereof, be arranged at the back of the feed vehicle, such as at the back of the container.

The feed-delivering device can be arranged pivotally around an axis being essentially parallel with the longitudinal axis of the feed vehicle.

The tubing of the feed-delivering device can be a flexible tubing. This could be the case for a manually handled feed-delivering device or a feed-delivering device attached to a robot arm.

The tubing of the feed-delivering device can be an essentially rigid tubing and the feed delivering device thereby by considered a feed-delivering arm.

The tubing, especially an essentially rigid tubing of the feed-delivering device, can comprise a lower tubular section and an upper tubular section, the tubular sections being telescopically connected allowing for decreasing and increasing the length of the tubing, the upper tubular section being movable between a retracted and an extended position relative to the lower tubular section. Thereby, it is possible to adjust the length of the feed-delivering device or the feed-delivering arm to the desired height of the outlet opening of the mouthpiece above the top wall of the cages.

The feed vehicle can be provided with one or more control devices or control units for controlling the function and/or operation of different parts and/or devices of the feed vehicle.

The feed vehicle can comprise a control device configured for activating the cutting device to move the cutting member(s) from the first position outside the outlet opening to the cutting position when the desired feed string has emerged from the outlet opening.

The control device can be configured to move the cutting member(s) back to the first position after the feed string has been cut, such as immediately after the feed string has been cut.

The control device can be configured to maintain the cutting member(s) in the cutting and closing position until immediately before the control device, being configured to control the operation of the pumping mechanism, controls the second pump of the pump mechanism to deliver feed out through the outlet opening. Unintentional spilling of feed is thereby avoided when the cutting member(s) is/are dimensioned and configured to cover the entire outlet opening in the cutting position.

The control device can be configured to activate the cutting device when operation of the second pump of the pump mechanism is stopped.

The control device can be configured to move the cutting member(s) back to the first position after operation of the second pump of the pump mechanism is stopped, such as immediately after operation of the pump mechanism is stopped.

The feed vehicle can comprise a control device configured to control the operation of the pump mechanism and the activation of the cutting device based on a predetermined individual amount of feed to be delivered to each individual cage.

The feed vehicle can be a manned vehicle operated by an operator. The feed delivering device can also be operated by the operator of the feed vehicle, the feed delivering mouthpiece being manually operated by the operator.

The feed vehicle can be an unmanned vehicle having a control device configured to control the feed-delivering device, control the position of the feed vehicle and the speed of the feed vehicle based on appropriate sensors, detectors and emitters and GPS technic. The feed vehicle can be considered and named a feed robot.

The feed vehicle can comprise a detector, such as a camera, for determining the amount of feed present on a cage.

The feed vehicle can be electrically powered by a rechargeable battery.

### Brief Description of the Figures

Embodiments and examples of the invention will be described in more details in the following with regard to the accompanying figures. The figures show ways of implementing the present invention and are not to be construed as limiting to other possible embodiments falling within the scope of the attached set of claims.
Fig. 1 is a schematically perspective view of a first embodiment of a feed vehicle according to the invention, as seen obliquely from behind,
Fig. 2 is a schematically top view of the feed vehicle shown in Fig. 1,
Fig. 3 is a schematically sectional view of a feed-delivering device also named a feed-delivering arm and a first pump pumping feed into the lower end of the feed-delivering device, the feed-delivering arm and the first pump being separated from the remainder of the feed vehicle,
Fig. 4 is a schematically perspective and sectional view of a mouthpiece of the feed-delivering device and showing a first example of a cutting device of a feed-delivering device,
Fig. 5 is a schematically perspective and sectional view of the mouthpiece of the feed-delivering device seen from behind and the cutting device being omitted.
Fig. 6 is a schematically perspective and sectional view of a mouthpiece of the feed-delivering device and showing a second example of a cutting device of a feed-delivering device, and
Fig. 7 is a schematically sectional view of an upper of a second example of a portion of a feed-delivering arm.

### Detailed Description of the Invention

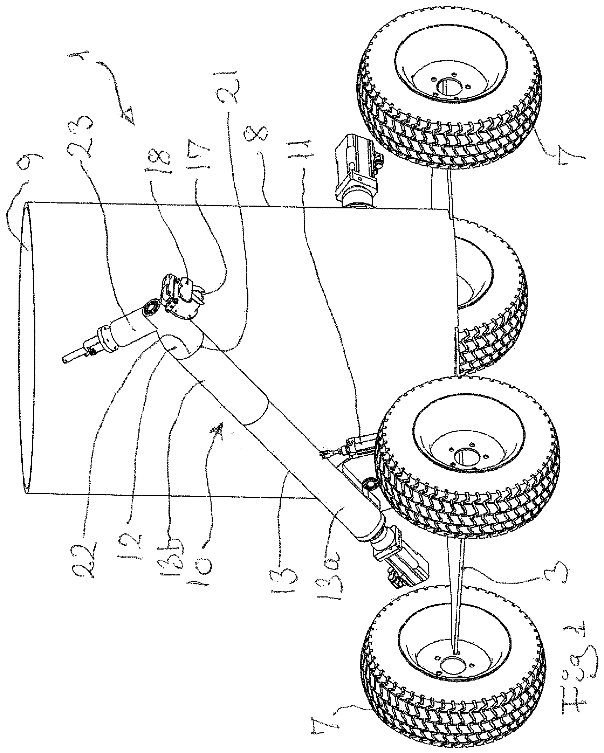

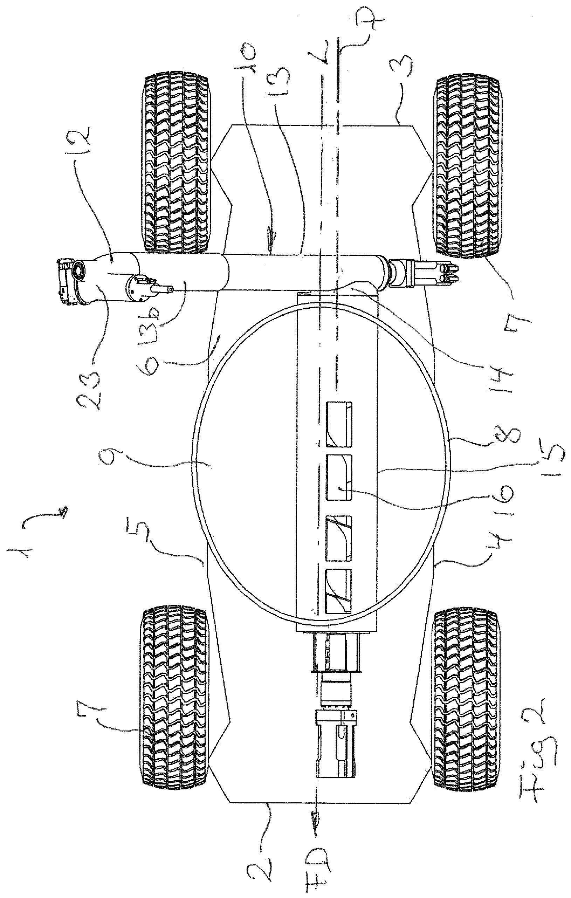

Reference is made to Figs. 1 and 2 disclosing a first embodiment of a powered unmanned feed vehicle 1 according to the present invention for feeding minks raised in mink cages having wire mesh top walls.

The feed vehicle 1 has a longitudinal axis L, a front 2, a back 3, a left lateral side 4 and a right lateral side 5 as seen in the forward driving direction FD of the vehicle 1 and comprises a frame 6 supported by four steerable wheels 7 and carrying a feed container 8 having an inner space 9 for storing feed.

Additionally, the feed vehicle 1 comprises a feed-delivering device in the form of a feed-delivering arm 10 for delivering feed from the feed container 8 to an inner chamber 27 of a feed-delivering mouthpiece 12, out through an outlet opening 17 of the mouthpiece 12 and on to the wire mesh top walls of the cages and a not shown programmable feeding control unit for controlling the amount of feed delivered to the individual cages. The feed is pumped from the feed container 8 and out through the outlet opening 17 of the mouthpiece by means of a pump mechanism 26.

The feed-delivering arm 10 is at the back 3 of the vehicle 1 connected pivotally to the lower end of the rear of the feed container 8. The feed-delivering arm is, by means of a linear actuator 11, pivotal between the shown operating position and a rest position around a pivot axis P being essentially parallel to the longitudinal axis L of the vehicle 1. In the shown operating position, the feed-delivering arm 10 extends outside the feed container 8 upwardly and laterally beyond a lateral side of the vehicle 1 in order to deliver feed to the top walls of the cages. The feed-delivering arm 10 extends upwardly and laterally in a plane being essentially perpendicular to the longitudinal axis L of the vehicle 1 and is pivoted in said plane. In the rest position, the feed discharge arm is pivoted to a more upright position to be positioned within the lateral boundaries of the vehicle 1 defined by the lateral sides and/or the wheels 7 of the vehicle 1.

The feed delivering arm 10 comprises a tubing 13 communicating at a lower end thereof with a first pump 14 of the pump mechanism 26. A first pump outlet 14 of a first pump 15 having a first pump inlet 16 communicating with the interior of the feed container 8. The tubular element 13 of the feed delivering arm 10 comprises a lower tubular element section 13a and an upper tubular element section 13b. The first and second tubular element sections 13a,13b are telescopically connected, allowing for decreasing and increasing the length of the feed discharge arm 10, the upper tubular element section 13b being movable between a retracted and an extended position relative to the lower tubular element section 13a.

In the present example, the first pump is a screw pump 15 and is configured to convey feed from the pump outlet 14 of the pump 15 through the tubing 13 and into the feed-delivering mouthpiece 12 having an mouthpiece inlet 21 being connected to a tubing outlet 22 at an upper end of the tubing 13. From the mouthpiece the feed is pumped out through the outlet opening 17 by a second pump means 23 of the pump mechanism 26. The feed leaves the outlet opening 17 in the shape of a string of feed. The string of feed is severed by a first example of cutting device 18 having two cutting members 19,20 and will be described in more detail below.

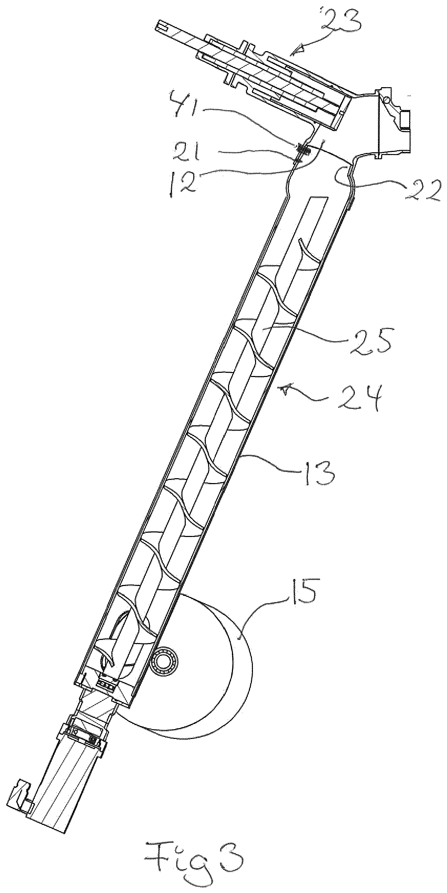

As shown in Fig. 3, the pump mechanism 26 can comprise a third pump 24. In the example shown, the third pump 24 comprises the tubing 13 and a pump screw 25 arranged in the tubing and can be considered a screw pump. The third pump 24 is configured for pumping feed received from the first pump 15 through the tubing 13 and into the mouthpiece 12. During operation of the pump mechanism 26, the first pump 15 can be constantly running, and the third pump 24 can also be constantly running. Alternatively, the speed of the first and especially the third pump can be varied to deliver the needed amount of feed to the chamber 27 of the mouthpiece 12 to at least essentially fill the chamber with feed. Further, it should be noted that a flow meter 41 is arranged in the tubing 13 adjacent an outlet 22 thereof or in the mouthpiece 12 adjacent an inlet 21 thereof. The flow meter is configured for measuring the flow of feed from the tubing 13 and into the mouthpiece 12.

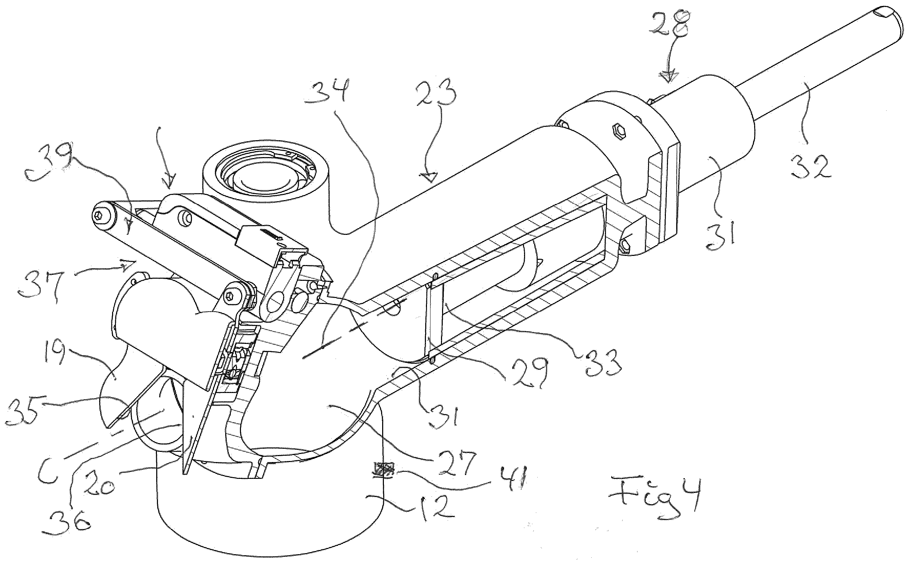

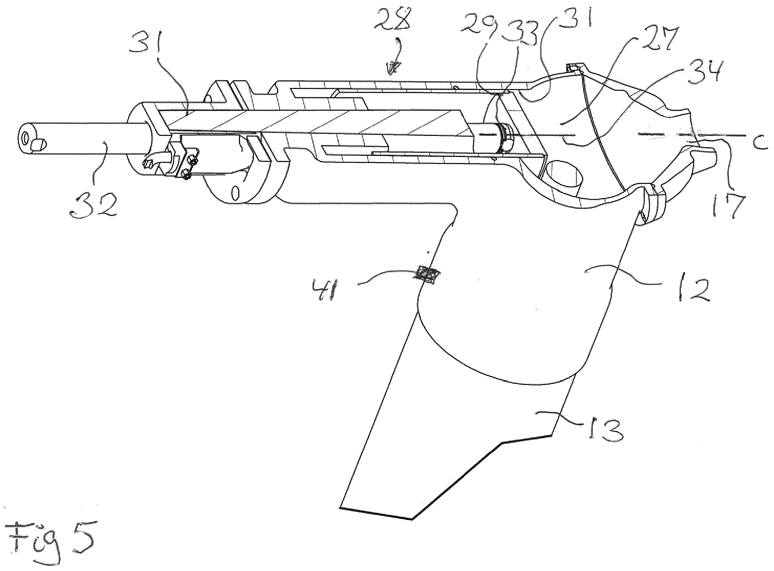

Reference is now made to Figs. 4 and Fig. 5 disclosing the second pump means 23 associated with the mouthpiece 12 being driven by a drive means 28. The second pump means 23 comprises the inner chamber 27 of the mouthpiece, and a portion thereof defined by a movable wall portion is the wall of a piston 29 having a cylindrical outer wall and arranged axially movable in a cylindrical part 30 of the chamber 27 of the mouthpiece 12. The piston is driven by the drive means being a high-speed linear actuator 28 such as a linear motor comprising a stator 31 and an extendable and retractable slider 32 also named a rod or a shaft, the inner end 33 of the slider 32 being connected with the piston 29. The movable wall, i.e. the piston 29, is movable between a first position in which the inner chamber defines a first volume and a second position in which the inner chamber defines a second volume. The first position of the piston 29 corresponds to a retracted position of the piston and the second position corresponds to an extended position of the piston. The difference between the first and the second volume of the chamber corresponds at least essentially to the amount of feed displaced from the chamber and out through the outlet opening of the mouthpiece when the movable wall portion, i.e. the piston 29, is moved from the first to the second position. The stroke of the slider 32 and thereby the stroke of the piston 29 is controllable by a control device whereby the amount of feed delivered out through the outlet opening 17 of the mouthpiece is controllable by controlling the stroke of the high-speed actuator.

Additionally, Fig. 4 discloses a flow meter 41 arranged in the mouthpiece 12 adjacent the inlet 21 thereof, while Fig. 5 discloses a flowmeter arranged in the mouthpiece 12 adjacent an inlet 21 thereof at the same time in the outlet 22 of the tubing 13 being overlapped by the inlet 21 of the mouthpiece 12. The flow meter is configured for measuring the flow of feed from the tubing 13 and into the mouthpiece 12. By means of the flow meter, it is possible to meter the amount of feed delivered from the tubing 13 to the inner chamber of the mouthpiece. As the amount delivered to the inner chamber is dependent of the speed of the third pump and the viscosity of the feed it is possible to adjust the speed of the pump so that the desired amount of feed is delivered to the chamber.

At present, the maximum amount to be delivered to a cage is expected to be about 500 g. In order to obtain a fast delivery of the feed, the actuator is configured to move the piston 29 with such a speed that the second pump means is able to deliver a feed portion of 500 ml out through the outlet opening of the mouthpiece in 1.0 sec or less, 0.8 sec or less, 0.6 sec or less, 0.5 sec or less, such as 0.4 sec, 0.3 sec, 0.2 sec or 0.1 sec or less.

The cylindrical part 30 of the chamber 27 of the mouthpiece 27 has a longitudinal axis 34 and is directed towards the outlet opening 17 of the mouthpiece 12, and preferably the longitudinal axis 34 extends essentially through the outlet opening 17 of the mouthpiece, such as essentially through the center of the outlet opening 17 of the mouthpiece 12.

As shown in Fig. 1 and more clearly in Fig. 4, the cutting device 18 comprises a first cutting member 19 and a second cutting member 20. Each cutting member has a leading edge 35;36 and is arranged to move towards each other from respective first positions outside the outlet opening 17 as seen in the direction of a central axis C of the outlet opening 17 of the mouthpiece 12 and to a cutting position in which the leading edges 35;36 of the cutting members meet within and together have swept the entire outlet opening 17 as seen in the direction of the central axis of the outlet opening of the mouthpiece and severed a feed string emerging from the outlet opening. The cutting members are plate-shaped, at least at the leading edges. The cutting edges are linear and meet at a central line across the outlet opening and preferably at an essentially vertical central line located in an essentially vertical plane through the central axis C of the outlet opening 17 of the mouthpiece 12. In the shown example, the cutting members are moved towards each other in a rotating movement provided by a rotation system 37 and abut each other in the cutting position. The rotation system comprises a linear actuator 38 configured to act on a link system 39 configured to rotate the cutting member 19,20 towards and away from each other.

Finally, it should be noted that the cutting members are configured to sweep the outlet opening adjacent an annular edge thereof or in contact with the annular edge defining the outlet opening and that the cutting members are shaped and dimensioned to cover the entire outlet opening as seen in the direction of the longitudinal axis of the mouthpiece in the cutting position. Thereby, the cutting member(s) become combined cutting and closing members covering the entire outlet opening as seen in the direction of the central axis of the outlet opening 17 of the mouthpiece 12 in the cutting position.

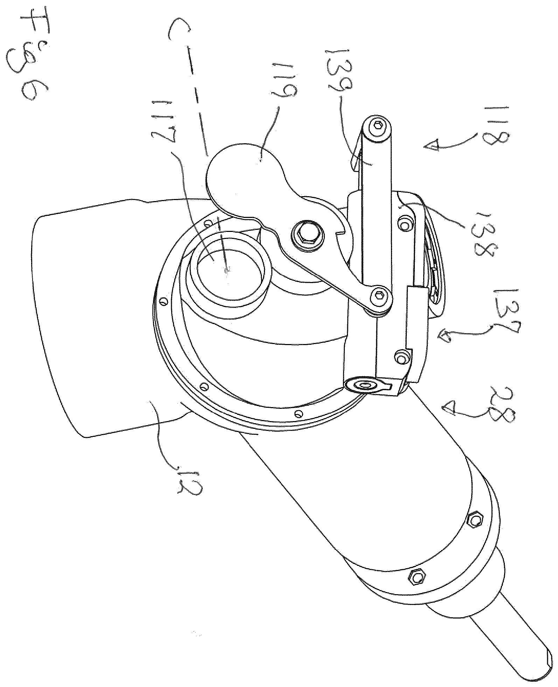

Fig. 6 discloses the mouthpiece with an alternative cutting device 118 only having a single plate-shaped cutting member 119 being configured to be moved across the outlet opening 117 for severing a food string emerging from the outlet opening 117 of the mouthpiece 12 by a rotational system configured for moving the cutting member 119 in a rotational movement by means of a rotation system 137. The rotation system 137 comprises a linear actuator 138 configured to act on a link system 139 configured to rotate the cutting member 119 across the outlet opening. The cutting member 119 is configured and dimensioned to cover the entire outlet opening 117 as seen the direction of the longitudinal axis of the mouthpiece in the cutting position. Thereby, the member is a combined cutting and closing member cutting a feed string and thereafter covering and at least essentially closing the entire outlet opening 117 as seen in the direction of the central axis C of the outlet opening 17 of the mouthpiece 12 in the cutting position.

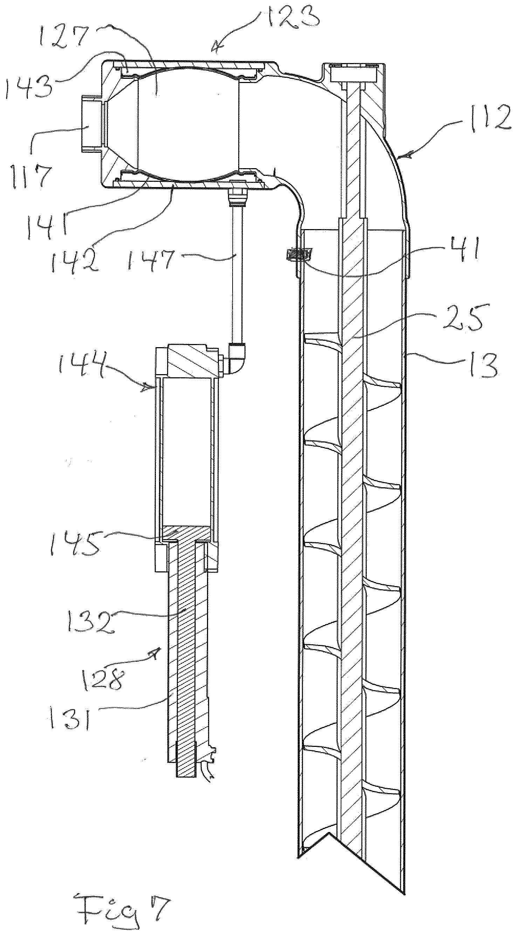

Fig 7 discloses a second example of a second pump means 123 associated with a mouthpiece 112 and being driven by a drive means 128. The second pump means 123 comprises the inner chamber 127 of the mouthpiece 112, and at least a portion of the inner chamber 127 is defined by a movable wall portion. The movable wall portion is a resilient wall, e.g. a resilient cylindrical wall 141, surrounded by a cover, such as a cylindrical cover 142, forming a sealed compartment 143 between the cover 142 and the resilient wall portion formed by the resilient wall 141. The compartment 143 contains a liquid and is connected to a hydraulic cylinder/piston unit 144 by a line 147. The piston 145 of the hydraulic cylinder/piston unit 144 is driven by the drive means 128. The drive means 128 is a high-speed linear actuator 128 such as a linear motor comprising a stator 131 and an extendable and retractable slider 132, also named a rod or a shaft. The inner end 133 of the slider 132 is connected to the piston 145. When feed is to be delivered to a cage, the slider 132 of the linear motor 128 act is extended to act on the piston 145 to move the piston forwards to supply liquid to the compartment 145 and thereby compress the resilient wall 141 from the first position defining the first volume and the second position defining a second volume being less than the first volume. Thereby, a feed portion size is displaced out through the outlet opening 117 of the mouthpiece 112 corresponding at least essentially to the difference between the first and the second volume. When the slider 132 is retracted and the piston thereby also retracted, liquid is drawn back into the cylinder 146 of the cylinder/piston unit 144 and the resilient wall 141 returned to its first position. The amount of liquid displaced from the cylinder 146 of the cylinder/piston unit 144 to the compartment 143 between the resilient wall 141 and the cover 142 when the slider 132 is extended and the piston 145 moved a certain length, i.e. stroke length, corresponds at least essentially to the amount of feed delivered out through the outlet opening 117 of the mouthpiece 113. The stroke of the slider 32 and thereby the stroke of the piston 129 is controllable by a control device, whereby the amount of feed delivered out through the outlet opening 117 of the mouthpiece 113 is controllable by controlling the stroke of the high-speed actuator.

Finally, it should be noted that the mouthpiece 112 is connected to the upper end of the tubing 13 surrounding the pump screw 25, whereby the tubing and the screw form a screw pump and that a flow meter 41 is arranged in the mouthpiece 112 adjacent an inlet thereof and at the same time in the outlet of the tubing 13 being overlapped by the inlet of the mouthpiece 112.

### LIST OF REFERENCE NUMERALS

- 1: feed vehicle
- 2: front
- 3: back
- 4: left side
- 5: right side
- 6: frame
- 7: wheel
- 8: feed container
- 9: inner space
- 10: feed delivering device, feed delivering arm
- 11: linear actuator
- 12,112: mouthpiece
- 13: tubing
- 13a: lower tubular section
- 13b: upper tubular section
- 14: first pump outlet
- 15: first pump
- 16: first pump inlet
- 17,117: outlet opening
- 18,118: cutting device
- 19,119: cutting member
- 20: cutting member
- 21: mouthpiece inlet
- 22: tubing outlet
- 23,123: second pump means
- 24: third pump
- 25: pump screw
- 26: pump mechanism
- 27,127: inner chamber
- 28,128: drive means, linear actuator, linear motor
- 29: piston
- 30: cylindrical part
- 31,131: stator
- 32,132: slider
- 33,133: inner end of slider
- 34: longitudinal axis of cylindrical part 30
- 35: leading edge
- 36: leading edge
- 37,137: rotation system
- 38,138: linear actuator
- 39,139: link system
- 41: flow meter
- 141: resilient wall
- 142: cover
- 143: compartment
- 144: cylinder/piston unit
- 145: piston
- 146: cylinder
- 147: line
- C: central axis
- FD: forward direction
- L: longitudinal axis
- P: pivot axis

## Claims

1. A powered feed vehicle (1) for delivering feed portions to fur animal cages, especially mink cages, especially to a wire mesh top wall thereof, said vehicle having a longitudinal axis (L), a front (2), a back (3), a first lateral side (4,5) and a second lateral side (4,5), and comprising:
- a frame (6) supported by wheels (7) and carrying a feed container (8) with an inner space (9) for storing feed, especially pasty (paste-like) feed
- a pump mechanism (26) for pumping feed from the feed container (8) into and through a tubing (13) of a feed-delivering device (10) to an inner chamber (27, 127) defined by a feed-delivering mouthpiece (12, 112) of the feed-delivering device (10) and out through a feed outlet opening (17, 117) of the mouthpiece (12, 112), said feed outlet opening (17, 117) having a central axis,
wherein the pump mechanism comprises:
- a first pump means (15) having an inlet (16) communicating with the inner space (9) of the feed container and an outlet (14) communicating with an inlet of the tubing (13), said first pump means (15) being configured for pumping feed from the inner space (9) of the feed container (8) to the tubing (13), said tubing (13) having an outlet (22) communicating with an inlet (21) of the mouthpiece (12, 112), and
- a second pump means (23, 123) comprising a drive means (28, 128) and being configured for pumping feed from the mouthpiece (12, 112) out through the outlet opening (17, 117) of the mouthpiece,
**characterized in that** the drive means (28, 128) is a linear actuator comprising a housing and an extendable and retractable rod (32,132) such as a high-speed actuator, e.g. a high-speed linear motor comprising a stator (31,131) and an extendable and retractable slider (32,132), rod or shaft.

2. A feed vehicle according to claim 1, wherein the first pump means (15) is a screw pump arranged at the bottom of the feed container and having an inlet (16) communicating with the inner space (9) of the feed container (8) and an outlet (14) communicating with an inlet of the tubing (13).

3. A feed vehicle according to any of the preceding claims, wherein the second pump means (23) comprises the inner chamber (27) defined by the mouthpiece (12), and a portion thereof defined by a movable wall portion is by means of the drive means (28) movable between a first position in which the chamber defines a first volume and a second position in which the inner chamber (27) defines a second volume being less than the first initial volume.

4. A feed vehicle according to claim 3, wherein the movable wall portion is a wall of a piston (29) arranged axially movable in a cylindrical part (30) of the inner chamber (27) of the mouthpiece (12), the piston being driven by the drive means (28).

5. A feed vehicle according to claim 4, wherein the cylindrical part (30) of the inner chamber (27) of the mouthpiece (12) has a longitudinal axis and is directed towards the outlet opening (17) of the mouthpiece (12) and preferably the longitudinal axis extends essentially through the outlet opening (17) of the mouthpiece.

6. A feed vehicle according to claim 5, wherein the longitudinal axis of the cylindrical part (30) of the inner chamber (27) of the mouthpiece (12) extends essentially through the center of the outlet opening (17) of the mouthpiece.

7. Feed vehicle according to claim 3, wherein the movable wall portion is a resilient wall, e.g. a cylindrical wall (141) surrounded by a cover (142) forming a compartment (143) between the cover and the resilient wall portion, the compartment containing a liquid and being connected to a hydraulic cylinder/piston unit (144), the piston thereof (145) being driven by the drive means (128).

8. A feed vehicle according to any of the preceding claims, wherein the drive means (128) of the second pump means (23) is a linear actuator allowing the second pump means (23) to deliver, i.e. displace, the largest expected feed portion, such as a feed portion of 500 ml out through the outlet opening (17) of the mouthpiece (12) in 1.0 sec or less, 0.8 sec or less, 0.6 sec or less, 0.5 sec or less, such as 0.4 sec, 0.3 sec, 0.2 sec or 0.1 sec or less.

9. A feed vehicle according to any of the preceding claims, wherein the pump mechanism (26) comprises a third pump means (24), the third pump means being configured for pumping feed through the tubing (13) and into the mouthpiece (12).

10. A feed vehicle according to claim 9, wherein the third pump means (24) comprises the tubing (13) and a pump screw (25) arranged in the tubing.

11. A feed vehicle according to any of the preceding claim comprising a cutting device (18,118) comprising at least one cutting member (19,20,119) arranged to be moved transversely in front of the outlet opening (17,117) of the mouthpiece (12,112) for severing a feed string emerging from the outlet opening.

12. A feed vehicle according to claim 11, wherein the cutting device (18) comprises a first (19) and a second (20) cutting member, each having a leading edge (35,36) and being arranged to move towards each other from respective first positions outside the outlet opening (17) as seen in the direction of the central axis of the outlet opening of the mouthpiece (12) and to a cutting position in which the leading edges of the cutting members meet within and together have swept the entire outlet opening (17) as seen in the direction of the central axis of the outlet opening of the mouthpiece (12) and severed a feed string emerging from the outlet opening.

13. A feed vehicle according to claim 11, wherein the cutting device comprises a single cutting member (119) being configured to be moved across the outlet opening (117) for severing a food string emerging from the outlet opening of the mouthpiece (12) by a rotational system configured for moving the cutting member in a rotational movement or by a translatory system configured for moving the cutting member in a linear movement.

14. A feed vehicle according to any of the preceding claims comprising a flow meter (41) in the tubing (13) adjacent an outlet (22) thereof or in the mouthpiece (12) adjacent an inlet (21) thereof, the flow meter being configured for measuring the flow of feed from the tubing and into the mouthpiece.

## Patentansprüche

1. Angetriebenes Fütterungsfahrzeug (1) zum Zuführen von Futtermittelportionen zu Pelztierkäfigen, insbesondere Nerzkäfigen, insbesondere zu einer Drahtgitteroberwand davon, wobei das Fahrzeug eine Längsachse (L), eine Vorderseite (2), eine Rückseite (3), eine erste laterale Seite (4, 5) und eine zweite laterale Seite (4, 5) aufweist, und umfassend:
- einen Rahmen (6), der von Rädern (7) getragen wird und einen Futtermittelbehälter (8) mit einem Innenraum (9) zum
Lagern von Futtermitteln, insbesondere von pastösem (Pasten-ähnlichen) Futtermitteln,
- einen Pumpenmechanismus (26)
zum Pumpen von Futtermittel vom Futtermittelbehälter (8) in und durch einen Schlauch (13) einer futterzuführenden Vorrichtung (10) zu einer Innenkammer (27, 127), die durch ein futterzuführendes Mundstück
(12, 112) der futterzuführenden Vorrichtung (10) begrenzt ist, und durch eine Futterauslassöffnung (17, 117) des Mundstücks (12, 112) heraus, wobei die Futterauslassöffnung (17, 117) eine zentrale Achse aufweist,
wobei der Pumpenmechanismus umfasst:
- ein erstes Pumpenmittel (15), das einen Einlass (16) aufweist, der mit dem Innenraum (9) des Futtermittelbehälters in Verbindung steht,
und einen Auslass (14) aufweist, der mit einem Eingang des Schlauchs (13) in Verbindung steht, wobei das Pumpenmittel (15)
konfiguriert ist, zum Pumpen von Futtermittel von den Innenraum (9) des Futtermittelbehälters (8) in den Schlauch (13), wobei
der Schlauch (13) einen Auslass (22) aufweist, der mit dem Einlass (21) des Mundstücks (12, 112) in Verbindung steht, und
- ein zweites Pumpenmittel (23, 123), das ein Antriebsmittel (28, 128) umfasst und konfiguriert ist, um Nahrung aus dem Mundstück (12, 112) durch die Auslassöffnung (17, 117) des Mundstücks herauszupumpen,
**dadurch gekennzeichnet, dass** das Antriebsmittel (28, 128) ein linearer Aktuator ist, umfassend ein Gehäuse und eine ausfahrbare und einziehbare Stange (32, 132)
wie z. B. einen Hochgeschwindigkeitsaktuator, z. B. einen Hochgeschwindigkeits-Linearmotor umfassend
einen Stator (31, 131) und einen aus- und einfahrbaren Schieber (32, 132), eine Stange oder Welle.

2. Fütterungsfahrzeug nach Anspruch 1, wobei das erste Pumpenmittel (15) eine Schraubenpumpe ist, die am
Boden des Futtermittelbehälters angeordnet ist und einen Einlass (16) aufweist, der mit dem Innenraum (9) des Futtermittelbehälters (8) in Verbindung steht, und
einen Auslass (14), der mit einem Einlass des Schlauchs (13) in Verbindung steht.

3. Fütterungsfahrzeug nach einem der vorstehenden Ansprüche, wobei das zweite Pumpenmittel (23)
die durch ein Mundstück (12) definierte Innenkammer (27) umfasst,
und ein durch einen beweglichen Wandabschnitt definierter Abschnitt davon mittels des Antriebsmittels (28) zwischen einer ersten Position, in der die
Kammer ein erstes Volumen definiert und einer zweiten Position, in der die Innenkammer (27)
ein zweites Volumen definiert, das kleiner ist als das erste Ausgangsvolumen, beweglich ist.

4. Fütterungsfahrzeug nach Anspruch 3, wobei der bewegliche Wandabschnitt eine Wand eines Kolbens (29) ist, der
axial in einem zylindrischen Teil (30) der Innenkammer (27) des Mundstücks (12) beweglich ist, wobei der Kolben durch die
Antriebsmittel (28) angetrieben ist.

5. Fütterungsfahrzeug nach Anspruch 4, wobei der zylindrische Teil (30) der Innenkammer (27) des Mundstücks (12)
eine Längsachse aufweist und auf die Auslassöffnung (17) des Mundstücks (12) gerichtet ist und vorzugsweise die
Längsachse im Wesentlichen durch die Austrittsöffnung (17) des Mundstücks verläuft.

6. Fütterungsfahrzeug nach Anspruch 5, wobei die Längsachse des zylindrischen Teils (30) der Innenkammer (27)
des Mundstücks (12) sich im Wesentlichen durch die Mitte der Auslassöffnung (17) des Mundstücks erstreckt.

7. Fütterungsfahrzeug nach Anspruch 3, wobei der bewegliche Wandabschnitt eine elastische Wand ist, z. B. eine zylindrische
Wand (141), die von einer Abdeckung (142) umgeben ist, die ein Fach (143) zwischen der Abdeckung und dem elastischen Wandabschnittbildet, wobei die
der eine Flüssigkeit enthält und mit einer Hydraulikzylinder/Kolben-Einheit (144) verbunden ist, wobei der Kolben
dessen (145) durch das Antriebsmittel (128) angetrieben wird.

8. Fütterungsfahrzeug nach einem der vorstehenden Ansprüche, wobei das Antriebsmittel (128) des zweiten Pumpenmittels (23)
ein linearer Aktuator ist, der es dem zweiten Pumpenmittel (23) ermöglicht
den größten erwarteten Futteranteil zu liefern, d. h. zu verlagern,
wie z. B. eine Futtermittelmenge von 500 ml durch die Auslassöffnung (17) des Mundstücks (12) in 1,0 sec oder weniger, 0,8
sec oder weniger, 0,6 sec oder weniger, 0,5 sec oder weniger, wie 0,4 sec, 0,3 sec, 0,2 sec oder 0,1 sec oder weniger.

9. Fütterungsfahrzeug nach einem der vorstehenden Ansprüche, wobei der Pumpenmechanismus (26) ein
ein drittes Pumpenmittel (24) umfasst, wobei das dritte Pumpenmittel konfiguriert ist, um Futtermittel durch den Schlauch (13) und in das Mundstück (12) zu pumpen.

10. Fütterungsfahrzeug nach Anspruch 9, wobei das dritte Pumpenmittel (24) den Schlauch (13) und eine Pumpen-Schraube (25) umfasst, die in der Rohrleitung angeordnet ist.

11. Fütterungsfahrzeug nach einem der vorstehenden Ansprüche, umfassend eine Schneidvorrichtung (18, 118) umfassend zumindest
ein Schneidelement (19, 20, 119), der angeordnet ist, um quer vor die Auslassöffnung (17, 117) des Mundstücks (12, 112) bewegt zu werden zum Durchtrennen eines aus der Auslassöffnung austretenden Futterstrangs.

12. Fütterungsfahrzeug nach Anspruch 11, wobei die Schneidvorrichtung (18) ein erstes (19) und ein zweites (20) Schneidelement umfasst,
die jeweils eine Vorderkante (35, 36) aufweisen
und die angeordnet sind zum Bewegen von den jeweiligen
ersten Positionen außerhalb der Auslassöffnung (17),
gesehen in der Richtung der Mittelachse der Auslassöffnung
des Mundstücks (12)
und in eine Schneidposition, in der sich die Vorderkanten der Schneidelemente innerhalb treffen
und zusammen die gesamte Austrittsöffnung (17) in Richtung der Mittelachse
der Auslassöffnung des Mundstücks (12) überstrichen haben
und einen aus der Auslassöffnung austretenden Futtermittelstrang durchtrennt haben.

13. Fütterungsfahrzeug nach Anspruch 11, wobei die Schneidvorrichtung ein einziges Schneidelement
(119) umfasst,
das konfiguriert ist, um über die Auslassöffnung (117) bewegt zu werden
zum Durchtrennen eines Futtermittelstrangs, der aus der
Auslassöffnung des Mundstücks (12)
durch ein Rotationssystem austritt, das konfiguriert ist, um das Schneidelement in einer Rotationsbewegung zu bewegen, oder durch ein Translationssystem austritt, das konfiguriert ist, um das Schneidelement in einer linearen Bewegung zu bewegen.

14. Fütterungsfahrzeug nach einem der vorstehenden Ansprüche, umfassend einen Durchflussmesser (41) in dem Schlauch (13) benachbart zu
einem Auslass (22) davon oder im Mundstück (12) neben einem Einlass (21) davon, wobei der Durchflussmesser konfiguriert ist zum
Messen des Durchflusses von Futtermitteln aus dem Schlauch und in das Mundstück.

## Revendications

1. Véhicule d'alimentation électrique (1) pour distribuer des portions d'aliments vers des cages d'animaux à fourrure, notamment vers des cages de visons, notamment vers une paroi supérieure en treillis métallique de celles-ci, ledit véhicule ayant un axe longitudinal (L), un avant (2), un arrière (3), un premier côté latéral (4,5) et un deuxième côté latéral (4,5), et comprenant :
- un châssis (6) supporté par des roues (7) et portant un récipient d'aliments (8) avec un espace interne (9) pour stocker des aliments, en particulier des aliments pâteux (en pâte)
- un mécanisme de pompage (26) pour pomper les aliments depuis le récipient d'aliments (8) dans et à travers une tubulure (13) d'un dispositif de distribution d'aliments (10) vers une chambre interne (27, 127) délimitée par un embout buccal de distribution d'aliments (12, 112) du dispositif de distribution d'aliments (10) et hors d'une ouverture de sortie d'aliments (17, 117) de l'embout buccal (12, 112), ladite ouverture de sortie d'aliments (17, 117) ayant un axe central, dans lequel le mécanisme de pompage comprend :
- un premier moyen de pompage (15) ayant une entrée (16) communiquant avec l'espace interne (9) du récipient d'aliments et une sortie (14) communiquant avec une entrée de la tubulure (13), ledit premier moyen de pompage (15) étant configuré pour pomper des aliments depuis l'espace interne (9) du récipient d'aliments (8) vers la tubulure (13), ladite tubulure (13) ayant une sortie (22) communiquant avec une entrée (21) de l'embout buccal (12, 112), et
- un deuxième moyen de pompage (23, 123) comprenant un moyen d'entraînement (28, 128) et étant configuré pour pomper des aliments depuis l'embout buccal (12, 112) à travers l'ouverture de sortie (17, 117) de l'embout buccal,
**caractérisé en ce que** le moyen d'entraînement (28, 128) est un actionneur linéaire comprenant un boîtier et une tige extensible et rétractable (32, 132) tel qu'un actionneur à grande vitesse, par exemple un moteur linéaire à grande vitesse comprenant un stator (31, 131) et un coulisseau extensible et rétractable (32, 132), une tige ou un arbre.

2. Véhicule d'alimentation selon la revendication 1, dans lequel le premier moyen de pompage (15) est une pompe à vis agencée au niveau du fond du récipient d'aliments et ayant une entrée (16) communiquant avec l'espace interne (9) du récipient d'aliments (8) et une sortie (14) communiquant avec une entrée de la tubulure (13).

3. Véhicule d'alimentation selon l'une quelconque des revendications précédentes, dans lequel le deuxième moyen de pompage (23) comprend la chambre interne (27) délimitée par l'embout buccal (12), et une partie de celui-ci délimité par une partie paroi mobile est, au moyen du moyen d'entraînement (28), amovible entre une première position dans laquelle la chambre délimite un premier volume et une deuxième position dans laquelle la chambre interne (27) délimite un deuxième volume inférieur au premier volume initial.

4. Véhicule d'alimentation selon la revendication 3, dans lequel la partie paroi mobile est une paroi d'un piston (29) agencé mobile axialement dans une partie cylindrique (30) de la chambre interne (27) de l'embout buccal (12), le piston étant entraîné par le moyen d'entraînement (28).

5. Véhicule d'alimentation selon la revendication 4, dans lequel la partie cylindrique (30) de la chambre interne (27) de l'embout buccal (12) a un axe longitudinal et est dirigé vers l'ouverture de sortie (17) de l'embout buccal (12) et de préférence l'axe longitudinal s'étend essentiellement à travers l'ouverture de sortie (17) de l'embout buccal.

6. Véhicule d'alimentation selon la revendication 5, dans lequel l'axe longitudinal de la partie cylindrique (30) de la chambre interne (27) de l'embout buccal (12) s'étend essentiellement à travers le centre de l'ouverture de sortie (17) de l'embout buccal.

7. Véhicule d'alimentation selon la revendication 3, dans lequel la partie paroi mobile est une paroi élastique, par exemple une paroi cylindrique (141) entourée d'un couvercle (142) formant un compartiment (143) entre le couvercle et la partie paroi élastique, le compartiment contenant un liquide et étant relié à une unité hydraulique vérin/piston (144), le piston de celle-ci (145) étant entraîné par le moyen d'entraînement (128).

8. Véhicule d'alimentation selon l'une quelconque des revendications précédentes, dans lequel le moyen d'entraînement (128) du deuxième moyen de pompage (23) est un actionneur linéaire permettant au deuxième moyen de pompage (23) de distribuer, c'est-à-dire de déplacer la plus grande portion d'aliments attendue, tel qu'une portion d'aliments de 500 ml sortant par l'ouverture de sortie (17) de l'embout buccal (12) en 1,0 s ou moins, 0,8 s ou moins, 0,6 s ou moins, 0,5 s ou moins, par exemple 0,4 s, 0,3 s, 0,2 s ou 0,1 s ou moins.

9. Véhicule d'alimentation selon l'une quelconque des revendications précédentes, dans lequel le mécanisme de pompage (26) comprend un troisième moyen de pompage (24), le troisième moyen de pompage étant configuré pour pomper des aliments à travers la tubulure (13) et dans l'embout buccal (12).

10. Véhicule d'alimentation selon la revendication 9, dans lequel le troisième moyen de pompage (24) comprend la tubulure (13) et une vis de pompe (25) disposée dans la tubulure.

11. Véhicule d'alimentation selon l'une quelconque des revendications précédentes comprenant un dispositif de coupe (18, 118) comprenant au moins un organe de coupe (19, 20, 119) agencé pour être déplacé transversalement devant l'ouverture de sortie (17, 117) de l'embout buccal (12, 112) pour couper un cordon d'aliments sortant de l'ouverture de sortie.

12. Véhicule d'alimentation selon la revendication 11, dans lequel le dispositif de coupe (18) comprend un premier (19) et un deuxième (20) organe de coupe, ayant chacun un bord d'attaque (35, 36) et étant agencés pour se déplacer l'un vers l'autre à partir de premières positions respectives en dehors de l'ouverture de sortie (17) vues dans la direction de l'axe central de l'ouverture de sortie de l'embout buccal (12) et jusqu'à une position de coupe à l'intérieur de laquelle les bords d'attaque des organes de coupe se rencontrent et ont balayé ensemble toute l'ouverture de sortie (17) telle que vue dans la direction de l'axe central de l'ouverture de sortie de l'embout buccal (12) et ont coupé un cordon d'aliments sortant de l'ouverture de sortie.

13. Véhicule d'alimentation selon la revendication 11, dans lequel le dispositif de coupe comprend un seul organe de coupe (119) étant configuré pour être déplacé à travers l'ouverture de sortie (117) pour couper un cordon d'aliments sortant de l'ouverture de sortie de l'embout buccal (12) par un système rotatif configuré pour déplacer l'organe de coupe dans un mouvement de rotation ou par un système translatoire configuré pour déplacer l'organe de coupe dans un mouvement linéaire.

14. Véhicule d'alimentation selon l'une quelconque des revendications précédentes comprenant un débitmètre (41) dans la tubulure (13) adjacente à une sortie (22) de celle-ci ou dans l'embout buccal (12) adjacent à une entrée (21) de celui-ci, le débitmètre étant configuré pour mesurer le débit d'aliments depuis la tubulure et dans l'embout buccal.
